# DEMANDE DE BREVET EUROPEEN

(11) **EP 2 899 571 A1**
(43) Date de publication de la demande: **29.07.2015**
(21) Numéro de dépôt: 15305064.6
(22) Date de dépôt: 22.01.2015
(51) Int. Cl.: G01V 1/28, G01V 99/00, G06T 17/05

(54) **Procédé de construction d'un maillage volumique pour la modelisation de structures geologiques**

(30) Priorité: 28.01.2014 FR 1450670
(71) Demandeur: IFP Energies nouvelles, 92852 Rueil-Malmaison Cedex (FR)
(72) Inventeur: Borouchaki, Houman, 75007 Paris (FR); Lecomte, Jean-François, 92500 Rueil-Malmaison (FR); Daniel, Jean-Marc, 78400 Chatou (FR); Delage, Christophe, 92000 Nanterre (FR); Bennis, Chakib, 92500 Rueil-Malmaison (FR)

(57) **Abrégé**

- Procédé pour construire un maillage volumique d'une formation souterraine comprenant au moins une couche sédimentaire traversée par au moins une faille.
- A partir d'une représentation dans un domaine fermé de la géométrie des horizons et des failles dans un espace paramétrique avant déformation et rupture, on projette sur une surface de référence les limites des blocs délimités par les failles, les horizons et les bords du domaine. Puis on construit un maillage surfacique contraint par les projections ainsi obtenues sur la surface de référence. A chaque noeud du maillage surfacique, on définit une ligne polygonale verticale passant par ce noeud. Puis on construit un maillage volumique par extrusion verticale du maillage surfacique le long des lignes polygonales.
- Application notamment à l'exploration et à exploitation de gisements pétroliers.

## Description

La présente invention concerne le domaine de l'exploration pétrolière, plus particulièrement le domaine de l'exploration et de l'exploitation des réservoirs pétroliers ou de sites de stockage géologique de gaz.

L'étude d'un champ pétrolier nécessite la construction d'une représentation de la formation souterraine étudiée, appelée aussi modèle géologique au sens large ou encore géomodèle. Ces modèles, bien connus et largement utilisés dans l'industrie pétrolière, permettent de déterminer de nombreux paramètres techniques relatifs à la recherche, l'étude ou l'exploitation d'un réservoir, d'hydrocarbures par exemple. Ainsi, un modèle géologique se doit d'être représentatif de la structure d'un réservoir ainsi que de son comportement. Ce type de maquette du sous-sol est le plus souvent représenté sur un ordinateur, par un maillage ou grille, généralement tridimensionnel, chaque maille étant caractérisée par une ou plusieurs propriétés pétrophysiques (faciès, porosité, perméabilité, saturation, etc).

Aujourd'hui, l'exploration pétrolière s'intéresse aux zones à géométrie complexe, où les failles sont nombreuses et leurs positions aléatoires. Ainsi, avant même la phase de remplissage par des propriétés pétrophysiques, la construction d'un maillage 3D dans un tel contexte doit le plus fidèlement possible rendre compte de la géométrie des horizons qui délimitent les différentes couches géologiques, et de celle des failles qui intersectent les horizons. Les horizons et les failles proviennent généralement d'une interprétation d'une image sismique et sont fournis le plus souvent sous la forme de semis de points.

Le maillage résultant peut ensuite être utilisé pour réaliser des simulations numériques telles que la modélisation de bassin, la simulation de réservoir et/ou la simulation d'injection de CO2, simulations visant à améliorer la compréhension d'un champ pétrolier ou d'un site de stockage géologique de gaz.

La modélisation de bassin vise à reconstruire l'histoire géologique d'un bassin sédimentaire et de ses systèmes pétroliers pour aider à localiser les pièges à hydrocarbures, c'est-à-dire les réservoirs, à estimer leur quantité et qualité, et enfin, à évaluer les risques de rencontrer des excès de pression pendant les forages. La simulation de réservoir étudie l'évolution au cours du temps des proportions d'eau, de gaz et de pétrole dans le réservoir afin de juger de la rentabilité, de valider ou d'optimiser la position des puits assurant le fonctionnement de l'exploitation du réservoir. Dans une époque où le développement durable et la protection de l'environnement deviennent primordiaux, une troisième étude liée à l'exploration pétrolière consiste à effectuer des simulations pour l'injection du CO2 dans un milieu souterrain poreux.

La modélisation de bassin, la simulation de réservoir et la simulation de CO2 sont des techniques basées sur la simulation d'écoulement dans un milieu poreux. Un simulateur d'écoulement quant à lui est un logiciel permettant, entre autre, de modéliser la production d'un gisement en fonction du temps, à partir de mesures décrivant le gisement, c'est-à-dire à partir d'une représentation du milieu souterrain. Ces simulations sont réalisées au moyen d'un système d'équations aux dérivées partielles par des méthodes de volumes finis sur un modèle maillé du milieu souterrain concerné.

La modélisation de bassin réalise également des calculs mécaniques utilisant des méthodes en éléments finis, notamment pour calculer la déformation géomécanique du bassin au cours du temps.

Les simulateurs d'écoulement actuellement utilisés dans l'industrie nécessitent que le maillage volumique représentant la formation souterraine étudiée soit hexa-dominant, c'est-à-dire caractérisé par le plus d'éléments hexaédriques possible. Il est de plus souhaitable que les arêtes des éléments volumiques soient orientées perpendiculairement à la stratigraphie, ce que permet le maillage hexa-dominant. La représentation hexaédrique permet, qui plus est, de naturellement prendre en compte une anisotropie de type verticale. La modélisation de bassin a, en plus, des contraintes propres : les mailles doivent généralement être convexes, la représentation mathématique des horizons doit permettre de correctement représenter l'évolution avec le temps de la sédimentation et de la compaction des couches sédimentaires, et la représentation des failles doit permettre de correctement simuler des glissements le long des plans de failles.

### État de la technique

Les documents suivants seront cités au cours de la description :
Borouchaki, H., 2001, Génération de maillages de qualité : la Marche Unité, Traité en mécanique et ingénierie des matériaux, méthodes numériques, Maillage et adaptation, sous la direction de Paul-Louis George, Chapitre 4, pp. 139-171, Hermès, Paris, France.
Frey, P, and George, P.L. , 2008, Mesh Generation, Application to Finite Elements, Wiley.
Gringarten, E Haouesse, A. Arpat B, Nghiem L, 2009, Advantage of using vertical stair step faults in reservoir grids for flow simulation, SPE 119188, Society of Petroleum Engineers.
George, P.L. and Borouchaki, H., 1998, Delaunay Triangulation and Meshing. Applications to Finite Elements, Hermès, Paris, France.
Mallet, J-L., 2004, Space-Time Mathematical Framework for Sedimentary Geology. Journal of Mathematical Geology, 36, 1-32.
Thom, J and Höcker , C:, 2009, 3-D Grid Types in Geomodeling and Simulation - How the Choice of the Model Container Determines Modeling Results, Search and Discovery Article #40477.

La forme de représentation la plus simple d'un modèle géologique est une grille régulière (pour laquelle la distance entre les noeuds de la grille est invariante selon une même direction de l'espace) et structurée (la connexion entre les noeuds de la grille obéit à une loi mathématique simple). Ce type de grille est particulièrement facile à manipuler car il n'est pas nécessaire de stocker ni la géométrie de la grille (indiquant où sont placés les noeuds de la grille les uns par rapport aux autres) ni sa topologie (indiquant comment les noeuds de la grille sont reliés entre eux) : seul un tableau à trois dimensions contenant la propriété physique d'intérêt (amplitude, porosité, etc) est mémorisé. Ces grilles présentent un avantage important pour la simulation de bassin : elles permettent de correctement représenter la sédimentation ou la compaction des couches sédimentaires. Par contre, ce type de grille ne permet pas de correctement rendre compte de la géométrie des horizons et des failles telle qu'on peut l'observer dans la réalité, notamment dans le cas de zones structuralement complexes.

Pour répondre à ce besoin d'une représentation réaliste de la géométrie des horizons et failles, il est possible d'avoir recours à des maillages déstructurés, composés d'une représentation explicite de la topologie et d'éléments simples, comme par exemple des tétraèdres utilisés dans la méthode des éléments finis, dont certaines faces vont correspondre aux failles ou aux horizons. Cependant, une représentation fiable des failles et des horizons par ce type de maillage nécessite un nombre très important de mailles. De plus, ce type de représentation ne permet pas de correctement représenter l'anisotropie. Qui plus est, les calculs en volumes finis, tels ceux impliqués pour la simulation d'écoulement, supportent mal cette représentation tétraédrique. Enfin, les maillages déstructurés nécessitent de stocker la géométrie du maillage, ainsi que de disposer d'un moteur topologique performant. En ce qui concerne plus particulièrement les calculs de simulation de bassin, ce type de maillage ne présentant pas une direction d'arête privilégiée et perpendiculaire à la stratigraphie, la représentation correcte de la sédimentation et de la compaction est fortement compliquée.

Les premiers simulateurs de bassin ont introduit une flexibilité en ayant recours à des grilles semi-régulières, dites aussi "Grilles à piliers verticaux". Pour ce type de représentation, la grille est régulière dans les directions d'espace x et y, mais est irrégulière verticalement. L'élément de base de ce type de maillage est un hexaèdre. Ce type de maillage, structuré, nécessite seulement de stocker les différentes positions des noeuds de la grille dans la direction verticale afin de reconstruire la géométrie complète de la grille. De plus, en permettant de suivre la topographie de chaque horizon, ce type de maillage est parfaitement adapté pour représenter l'évolution avec le temps des couches sédimentaires dans les bassins. Le principal défaut de ce type de représentation est qu'il est très difficile de représenter des réseaux de failles complexes. La présence des failles est alors simulée à leurs intersections avec la grille par exemple par des variations arbitraires d'épaisseur ou encore par une valeur de la propriété pétrophysique étudiée moyenne. Cette représentation des failles ne permet notamment pas de simuler de glissement le long des failles. De plus, le choix de la valeur à attribuer est souvent difficile.

En ce qui concerne plus particulièrement la simulation de réservoir, une manière exacte de travailler consiste à découper une grille à piliers verticaux par les failles, comme pour les grilles de type "Faulted S-Grid" en anglais ou "Grille S faillée" en français (par exemple Thom et Höcke, 2009). Cependant, le découpage d'un hexaèdre par un réseau de failles représentées par des surfaces quelconques peut conduire à créer des polyèdres très complexes ou à des sous-maillages tétraédriques peu adaptés aux calculs en volumes finis. Une alternative consiste à introduire des piliers guidés par les failles. Malheureusement, ce type de grille, dites de type "Pillar Grid" en anglais ou "Grille à piliers" en français, ne permet pas de correctement représenter des réseaux de failles très complexes. En effet, le parallélisme des piliers au niveau des failles introduit des contraintes difficiles à respecter ne permettant pas dans tous les cas d'obtenir des grilles géométriquement correctes.

Aujourd'hui, les grilles les plus employées pour la simulation de réservoir sont les grilles dites de type "S-Grid" en anglais ou "Grille S" en français (Gringarten et al. 2009). Il s'agit de grilles structurées pour lesquelles les failles sont représentées par des discontinuités en forme de marches d'escalier. Ce type de grille permet de modéliser des réseaux de failles très complexes, tout en représentant correctement les couches sédimentaires. De plus, comme il s'agit d'un maillage structuré, la topologie est implicitement connue, sauf le long des failles où il faut explicitement décrire les liens entre les mailles en face à face. Par contre, cette représentation ne peut pas convenir pour les simulateurs de bassin, pour lesquels on doit pouvoir simuler des glissements le long des plans de failles au cours du temps.

Ainsi, aucun des maillages de l'art antérieur n'est parfaitement adapté à la fois à la simulation de bassin et à la simulation de réservoir.
La présente invention propose un procédé de construction d'un maillage volumique d'une formation souterraine permettant en particulier de concilier à la fois les contraintes de la simulation de bassin et celles de la simulation de réservoir, même dans le cas d'une formation souterraine à géométrie complexe.

### Le procédé selon l'invention

Ainsi, la présente invention concerne un procédé de construction d'un maillage volumique d'une formation souterraine comprenant au moins une couche sédimentaire, délimitée verticalement par deux horizons géologiques et traversée par au moins une faille, à partir d'une représentation dans un domaine fermé de la géométrie desdits horizons et de ladite faille dans un espace paramétrique avant déformation et rupture. Le procédé comporte les étapes suivantes :
a) on projette sur une surface de référence les limites d'au moins un bloc dans ledit domaine fermé, lesdits blocs étant délimités par ladite représentation desdites failles, desdits horizons et des bords dudit domaine fermé ;
b) on construit un maillage surfacique contraint par lesdites projections sur ladite surface de référence ;
c) à chaque noeud dudit maillage surfacique, on définit une ligne polygonale verticale ;
d) on construit un maillage volumique par extrusion verticale dudit maillage surfacique le long desdites lignes polygonales.

Selon un mode préféré de mise en oeuvre de l'invention, ladite surface de référence peut être un plan horizontal dans ledit espace paramétrique.

Selon un autre mode préféré de mise en oeuvre de l'invention, ledit espace paramétrique est l'espace paramétrique de Wheeler.

Préférentiellement, ladite surface de référence peut être la surface située à la côte t=0 dans ledit espace paramétrique de Wheeler.

Selon l'invention, on peut transposer ledit maillage volumique dans l'espace géologique via une méthode de transformation liant ledit espace paramétrique de Wheeler et l'espace géologique.

Selon l'invention, on peut appliquer une technique de bougé de noeuds audit maillage volumique.

Selon l'invention, ledit maillage surfacique peut être de type quad-dominant. Ledit maillage surfacique peut alors être obtenu selon les étapes suivantes :
- on peut générer un maillage triangulaire contraint par lesdites projections sur ladite surface de référence ;
- on peut apparier des couples de triangles adjacents pour former des quadrilatères.

De plus, ledit maillage triangulaire peut être obtenu selon une méthode d'avancée de front.

Selon l'invention, ladite ligne polygonale verticale d'un noeud du maillage surfacique peut être constituée d'au moins un segment vertical délimité par les intersections de la ligne verticale passant par ledit noeud avec lesdites représentations desdits horizons ou de ladite faille.

Selon l'invention, ladite extrusion verticale d'un élément surfacique peut être réalisée de la façon suivante :
- on peut parcourir simultanément et segment après segment lesdites lignes polygonales associées audit élément surfacique ;
- on peut relier latéralement les extrémités desdites lignes polygonales d'un même niveau et verticalement les extrémités desdites lignes polygonales de niveaux consécutifs ;
- pour chaque élément volumique ainsi formé, si des noeuds d'un même niveau n'appartiennent pas à une même faille ou à un même horizon, on peut découper ledit élément volumique selon au moins un plan transversal passant par les deux niveaux consécutifs.

Avantageusement, on peut mettre en oeuvre une étape de mise en conformité des courbes et points résultant de ladite projection desdites limites de blocs réalisée entre les étapes a) et b), consistant en une fusion desdites courbes et/ou desdits points dont l'inter-distance est inférieure à un seuil prédéterminé, et/ou en l'ajout de points au niveau des intersections entre plusieurs desdites courbes.

En outre, l'invention concerne un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé selon la description ci-dessus, lorsque ledit programme est exécuté sur un ordinateur.

On peut définir un procédé d'exploitation d'une formation souterraine en réalisant les étapes suivantes :
- on construit un maillage volumique représentatif de ladite formation au moyen du procédé de construction de maillage volumique selon l'invention ;
- on réalise une simulation de bassin et/ou une simulation de réservoir à partir dudit maillage volumique ;
- on détermine un schéma d'exploitation optimal du réservoir à partir desdits résultats de la simulation de bassin et/ou de la simulation de réservoir ;
- on exploite ledit réservoir en mettant en oeuvre ledit schéma d'exploitation optimal.

### Présentation succincte des Figures

D'autres caractéristiques et avantages du procédé selon l'invention, apparaîtront à la lecture de la description ci-après d'exemples non limitatifs de réalisations, en se référant aux figures annexées et décrites ci-après.
Les Figures 1A et 1B présentent les failles de deux modèles géologiques, notés Mod1 et Mod2.
Les Figures 2A et 2B montrent les limites de blocs des modèles Mod1 et Mod2.
Les Figures 3A et 3B représentent les projections des limites de blocs des modèles Mod1 et Mod2 sur un surface de référence située à la côte t=0 de l'espace paramétrique de Wheeler.
Les Figures 4A et 4B montrent le maillage surfacique de type quad-dominant réalisé pour les modèles Mod1 et Mod2.
La Figure 5 illustre la construction d'une ligne polygonale dans un milieu formé par trois horizons et une faille.
Les Figures 6A et 6B montrent les lignes polygonales obtenues pour les modèles Mod1 et Mod2.
Les Figures 7A et 7B illustrent les résultats possibles de l'extrusion verticale d'un élément surfacique de type quadrilatère.
Les Figures 8A et 8B illustrent les résultats possibles de l'extrusion verticale d'un élément surfacique de type triangle.
Les Figures 9A et 9B montrent les maillages volumiques de type hexa-dominant obtenus pour les modèles Mod1 et Mod2 dans l'espace paramétrique de Wheeler.
Les Figures 10A et 10B montrent les maillages volumiques obtenus dans l'espace géologique pour les modèles Mod1 et Mod2.

### Description détaillée du procédé

Les définitions suivantes sont utilisées au cours de la description de l'invention :
- *espace géologique :* il s'agit de l'espace euclidien à trois dimensions dans lequel les couches sédimentaires constituant une formation souterraine sont représentées telles qu'observables actuellement, c'est-à-dire après que les couches sédimentaires telles que déposées au cours du temps aient subi des épisodes tectoniques ayant provoqué les déformations et/ou les ruptures actuellement observables. Tout point situé dans l'espace géologique est caractérisé par ses coordonnées (x,y,z), où les coordonnées (x,y) correspondent aux coordonnées géographiques du point considéré et z correspond à l'altitude ou bien à la profondeur par rapport à la surface terrestre du point considéré. Cet espace est aussi connu sous le nom d'espace géographique.
- *espace paramétrique avant déformation et rupture* : il s'agit d'un espace paramétrique à trois dimensions dans lequel une formation souterraine est représentée avant déformation et rupture. Plus précisément, dans cet espace, les couches sédimentaires constituant une formation souterraine sont représentées dans la géométrie hypothétique de leur dépôt, la sédimentation étant supposée avoir eu lieu sur une surface plane et horizontale. Ainsi, un modèle géologique exprimé dans un espace paramétrique avant déformation et rupture correspond à un empilement de couches sédimentaires planes et horizontales. De plus, dans cet espace, les failles sont de rejet (décalage induit par la faille) nul. Par ailleurs, toute ligne verticale dans un espace paramétrique avant déformation et rupture correspond à une ligne localement perpendiculaire à la stratigraphie dans l'espace géologique.
- *espace paramétrique de Wheeler* : l'espace paramétrique de Wheeler est un espace paramétrique avant déformation et rupture particulier. Plus précisément, il s'agit d'un espace paramétrique à trois dimensions dans lequel tout point est caractérisé par ses coordonnées (u,v,t), où t correspond au temps géologique du dépôt du point considéré, et les coordonnées (u,v) sont des coordonnées d'espace contenues dans un plan parallèle aux horizons. Ainsi, l'axe vertical de l'espace paramétrique de Wheeler porte l'âge de la formation géologique d'un point de l'espace géologique. Un cas particulier des coordonnées (u,v) sont les coordonnées géographiques horizontales (x,y). Une solution particulière de cet espace a été décrite dans (Mallet, 2004). Ce type de représentation est aussi connue sous le nom de "modèle Geochron", de "représentation dans un système de coordonnées paléo-géographiques", et d'une manière générale, de "représentation UVT". On parle aussi de "transformation UVT" pour décrire la transformation qui permet de passer de l'espace géologique à l'espace paramétrique de Wheeler, et de "transformation UVT⁻¹" pour parler de la transformation permettant de passer de l'espace paramétrique de Wheeler à l'espace géologique. De telles transformations, directe et inverse, peuvent être réalisées à l'aide du logiciel SKUA® (PARADIGM ®, Israël).
- *liane polygonale* : il s'agit d'une figure géométrique formée d'une suite de segments, la seconde extrémité de chacun d'entre eux étant la première du suivant. Ce type de ligne est aussi connu sous le terme de ligne brisée.
- *ligne polygonale verticale* : il s'agit d'une ligne polygonale formée d'une suite de segments verticaux, la seconde extrémité de chacun d'entre eux étant la première du suivant, toutes les extrémités étant situées sur une même ligne verticale.
- *maillage conforme:* il s'agit d'un maillage pour lequel l'intersection de deux éléments quelconques est soit vide ou soit une face du maillage (sommet, arête, face triangulaire ou quadrilatérale).
- *maillage valide :* il s'agit d'un maillage dont tous les éléments sont de volume positif.

L'objet de la présente invention est un procédé pour représenter un modèle géologique du sous-sol sous la forme d'un maillage volumique. La formation souterraine étudiée comprend au moins une couche sédimentaire traversée par au moins une faille. Une couche sédimentaire est délimitée verticalement par deux horizons géologiques. L'invention nécessite de disposer d'une représentation mathématique dans un domaine fermé des horizons et des failles de la formation étudiée dans un espace paramétrique avant déformation et rupture. Cela signifie en particulier que la représentation d'un horizon correspond à une surface plane, horizontale et continue au travers des failles. Selon un mode de mise en oeuvre de l'invention, la représentation mathématique des horizons et des failles est exprimée dans l'espace paramétrique de Wheeler.

La présente invention comporte au moins les étapes suivantes :
a) on projette sur une surface de référence les limites d'au moins un bloc du domaine fermé, les blocs étant délimités par la représentation des failles, des horizons et des bords du domaine fermé ;
b) on construit un maillage surfacique contraint par les projections sur la surface de référence ;
c) à chaque noeud du maillage surfacique, on définit une ligne polygonale verticale ;
d) on construit un maillage volumique par extrusion verticale du maillage surfacique le long des lignes polygonales.

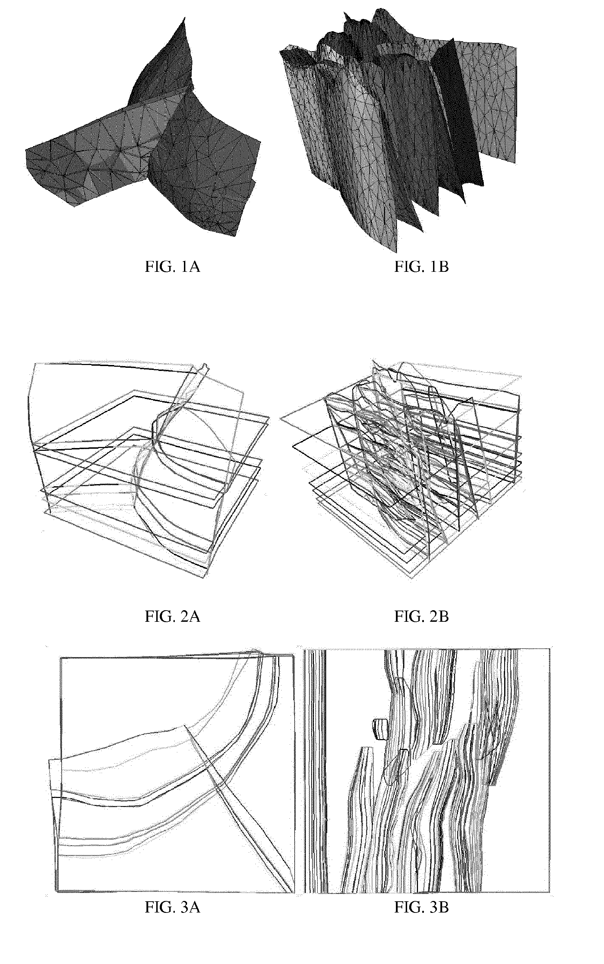

Les principales étapes de la présente invention sont détaillées ci-après. Elles sont illustrées sur deux modèles géologiques, appelés Mod1 et Mod2 dans la suite, bien connus de l'homme du métier. Mod1 est constitué de cinq horizons et de deux failles s'intersectant quasiment à angle droit (Figures 1A). Mod2 est quant à lui formé de sept horizons et de six failles quasiment parallèles entre elles (Figures 1 B). Les représentations mathématiques des horizons et des failles de ces modèles sont exprimées dans un domaine fermé de l'espace paramétrique de Wheeler.

### Projection des courbes correspondant aux limites de blocs sur une surface de référence

Il s'agit dans cette première étape de projeter verticalement, sur une surface de référence, les courbes correspondant aux limites d'au moins un des blocs formés par les horizons, les failles et les bords du domaine fermé définis dans un espace paramétrique avant déformation et rupture. Selon un premier mode de réalisation de l'invention, on projette sur une surface de référence l'ensemble des limites de blocs. Pour ce faire, on utilise la représentation mathématique de chacune des failles et de chacun des horizons dans l'espace paramétrique avant déformation et rupture, puis on calcule les courbes correspondant aux intersections entre chacune de ces représentations prises deux à deux, et entre chacune de ces représentations et les bords du domaine fermé. L'ensemble de ces courbes est ensuite projeté verticalement sur une surface de référence.

Pour chaque courbe projetée ainsi obtenue, on va conserver en mémoire les informations d'origine la concernant, c'est-à-dire l'objet géologique (faille, horizon ou bord de domaine) ou l'intersection d'objets géologiques (intersection entre deux failles, entre une faille et un horizon, entre une faille et un bord de domaine, entre un horizon et un bord de domaine) dont elle est issue.
Selon un mode préféré de réalisation de l'invention, la surface de référence est un plan horizontal dans l'espace paramétrique avant déformation et rupture.
Selon un deuxième mode préféré de réalisation de l'invention, la représentation mathématique des horizons et des failles étant définie dans l'espace paramétrique de Wheeler, la surface de référence est définie par le plan horizontal situé à la côte t=0 de cet espace.
Une illustration de cette étape est présentée dans les Figures 2A-2B et 3A-3B. Les Figures 2A et 2B représentent une vue 3D des limites des blocs constituant respectivement le modèle Mod1 et le modèle Mod2 dans l'espace paramétrique de Wheeler. Les Figures 3A et 3B représentent les projections verticales sur un plan de référence situé à la côte t=0 de l'espace paramétrique de Wheeler des limites des blocs respectivement du modèle Mod1 et du modèle Mod2.

### Mise en conformité des projections de limites de blocs sur une surface de référence

Selon un mode de réalisation de la présente invention, on peut ensuite avoir recours à un traitement de mise en conformité de l'ensemble de courbes et de points résultant de la projection sur la surface de référence des limites de blocs définie ci-dessus. Ainsi, lorsque la distance entre deux courbes ou deux points obtenus par projection sur la surface de référence est inférieure à un seuil prédéterminé, on procède à la fusion de ces deux courbes ou de ces deux points. Par ailleurs, lorsque deux courbes se coupent sur la surface de référence, on rajoute un point à l'emplacement de cette intersection.

On a également soin, lors de cette étape de mise en conformité, de conserver en mémoire les informations d'origine sur chaque nouvelle courbe et sur chaque nouveau point. Ainsi, par exemple, une courbe résultant de la fusion de deux courbes projetées conserve l'information sur ses deux courbes d'origine (appartenance et localisation). De même, un point rajouté à l'emplacement de l'intersection entre deux courbes contient l'information sur ses deux courbes d'origine (appartenance et localisation).

### Construction d'un maillage surfacique sur la surface de référence

Au cours de cette étape, un maillage surfacique contraint par les projections verticales sur la surface de référence des limites de blocs est généré. Pour cette étape de maillage surfacique, on peut définir une taille maximale attendue pour les éléments surfaciques individuels.
Selon un mode réalisation de la présente invention, on construit un maillage surfacique de type quad-dominant, c'est-à-dire pour lequel les éléments constituant le maillage sont majoritairement des quadrilatères. Dans ce cas, la construction du maillage peut comprendre deux étapes consécutives. La première étape consiste à générer un maillage triangulaire, pour lequel l'élément idéal est un triangle isocèle rectangle. Pour cela, selon un mode de réalisation de la présente invention, on applique une technique combinée, basée sur la méthode d'avancée de front pour la génération des points internes (Borouchaki, 2001) et la méthode de Delaunay généralisée pour la connexion de ces points (George and Borouchaki, 1998). Dans une deuxième étape, des couples de triangles adjacents sont appariés pour former des quadrilatères.

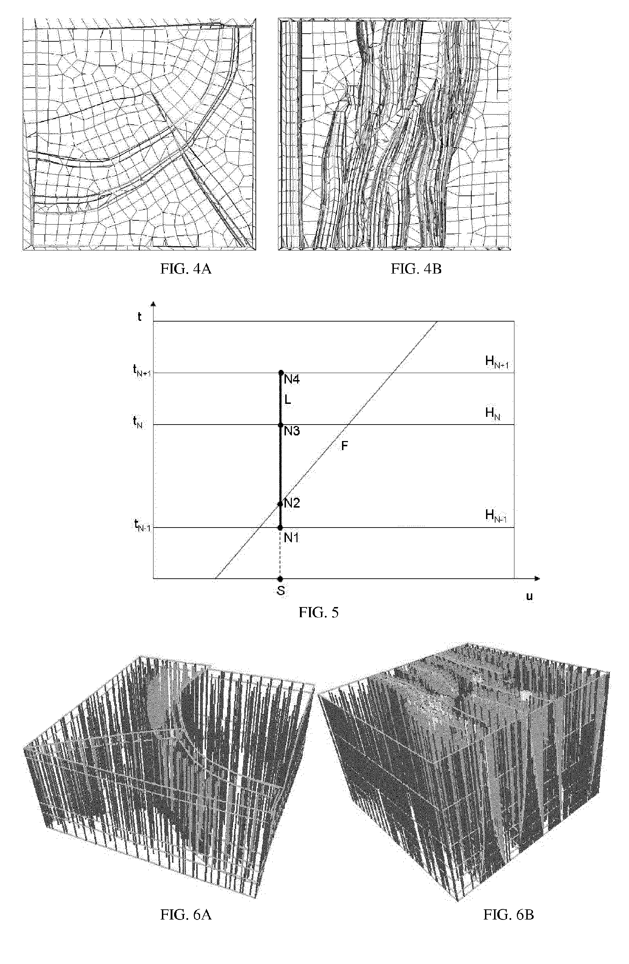

Les Figures 4A et 4B montrent le maillage surfacique de type quad-dominant contraint par les projections verticales sur le plan de référence t=0 des limites de blocs respectivement du modèle Mod1 et du modèle Mod2. On peut constater que ces maillages surfaciques sont principalement formés de quadrilatères, le reste des éléments surfaciques étant des triangles.

### Création de lignes polygonales verticales

Au cours de cette étape, à chaque noeud du maillage surfacique obtenu à l'étape de "Construction d'un maillage surfacique sur la surface de référence", on trace une ligne verticale passant par ce noeud et on calcule les intersections de cette ligne avec les représentations mathématiques des failles et horizons. A chaque noeud du maillage surfacique, on définit une ligne polygonale formée par l'ensemble des segments dont les extrémités sont les points d'intersection précédemment calculés. Les informations d'appartenance d'origine (horizon et/ou faille) de chacune des extrémités, ainsi que leur ordre (on parlera de niveau par la suite) le long de la ligne polygonale sont conservées en mémoire.

La Figure 5 présente un exemple de ligne polygonale verticale, notée L, calculée pour un milieu, représenté en deux dimensions, comportant trois horizons H_{N-1}, H_{N}, et H_{N+1} et une faille F, à partir d'un noeud S d'un élément surfacique situé dans un plan de référence situé à t=0. La ligne polygonale est formée de trois segments selon l'axe vertical et de quatre extrémités (ronds noirs) associées à quatre niveaux notés N1, N2, N3 et N4.
Les lignes polygonales associées aux modèles Mod1 et Mod2 sont présentées en gris foncé respectivement en Figure 6A et en Figure 6B.

### Création de sous-lignes polygonales verticales

L'étape de création de sous-lignes polygonales verticales est facultative et peut être mise en oeuvre lorsque la représentation d'au moins une faille est constituée de deux surfaces s'intersectant. Ceci se produit par exemple avec l'utilisation de la "transformation UVT" du logiciel SKUA ® (PARADIGM ®, Israël). Les surfaces des failles s'intersectant génèrent alors des blocs qui s'entremêlent. Dans un tel cas, la ligne polygonale initiée depuis un noeud d'un élément surfacique est découpée en plusieurs sous-lignes de sorte à ce que chaque sous-ligne appartienne toujours à un seul et même bloc.

Selon un mode de réalisation de la présente invention, le traitement de subdivision en sous-lignes polygonales utilise la connexité par arc des éléments d'un bloc (c'est-à-dire que les éléments d'un bloc peuvent toujours être reliés par un chemin) ainsi qu'au moins les règles suivantes :
- la borne supérieure d'une sous-ligne polygonale est soit un bord de domaine, soit le côté inférieur d'une faille, soit l'horizon le moins profond (ou encore l'horizon ayant une valeur de t maximal si l'on se trouve dans l'espace paramétrique de Wheeler) ;
- la borne inférieure d'une sous-ligne polygonale est soit un bord de domaine, soit le côté supérieur d'une faille, soit l'horizon le plus profond (ou encore ayant une valeur de t maximal si l'on se trouve dans l'espace paramétrique de Wheeler).

A noter que les sous-lignes polygonales d'une ligne polygonale peuvent se chevaucher dans l'espace paramétrique de Wheeler alors que les sous-lignes polygonales dans l'espace géologique sont bien disjointes.
Les sous-lignes polygonales associées aux modèles Mod1 et Mod2 sont présentées en gris clair respectivement en Figure 6A et en Figure 6B.

### Construction d'un maillage volumique par extrusion du maillage surfacique

Au cours de cette étape, le maillage volumique représentatif de la structure géologique étudiée dans l'espace paramétrique avant déformation et rupture est généré par extrusion verticale du maillage surfacique réalisé sur une surface de référence. L'extrusion est une technique utilisée dans le domaine du maillage et de la modélisation (voir par exemple Frey and George, 2008). Selon un mode de réalisation de la présente invention, pour un élément donné du maillage surfacique, on parcourt simultanément et segment après segment les lignes polygonales associées aux noeuds de l'élément surfacique considéré. Puis on considère les extrémités de chacun des segments de chacune des lignes polygonales et on les regroupe niveau par niveau. On relie ensuite par des segments de droite les extrémités d'un même niveau. On obtient ainsi une série d'éléments consécutifs, niveau par niveau, de même type géométrique (même nombre de noeuds et même nombre d'arêtes) que l'élément surfacique considéré. Puis afin de former des éléments volumiques, on connecte verticalement, par des segments de droite, les éléments consécutifs ainsi formés. Plus précisément, un élément volumique entre les niveaux N et N+1 est formé par l'élément du niveau N, celui du niveau N+1, les deux éléments étant connectés par des arêtes verticales correspondant aux segments entre les niveaux N et N+1 des lignes polygonales associées à l'élément surfacique considéré. On vérifie ensuite, pour chaque élément volumique ainsi formé, que tous les noeuds de même niveau appartiennent à un même objet géologique (horizon, faille ou bord de domaine). Si tel est le cas, alors l'élément volumique précédemment constitué est conservé. Si, pour un élément volumique donné; les noeuds d'un niveau donné n'appartiennent pas à un même objet géologique, alors des connections transverses, et non plus uniquement verticales, d'un niveau à un autre sont réalisées, ce qui a pour conséquence de découper l'élément volumique en au moins deux sous-éléments volumiques. Cette procédure sera détaillée et illustrée ci-après dans le cas d'un maillage surfacique de type quad-dominant. L'opération décrite ci-dessus est répétée pour l'ensemble des éléments du maillage surfacique. L'ensemble des éléments volumiques ainsi formés constitue le maillage volumique de la formation étudiée. Le fait que les éléments surfaciques soient ordonnés niveau par niveau selon l'axe vertical assure la conformité du maillage volumique. En effet, deux éléments volumiques adjacents ont ainsi toujours une face commune délimitée par des noeuds communs aux deux éléments.

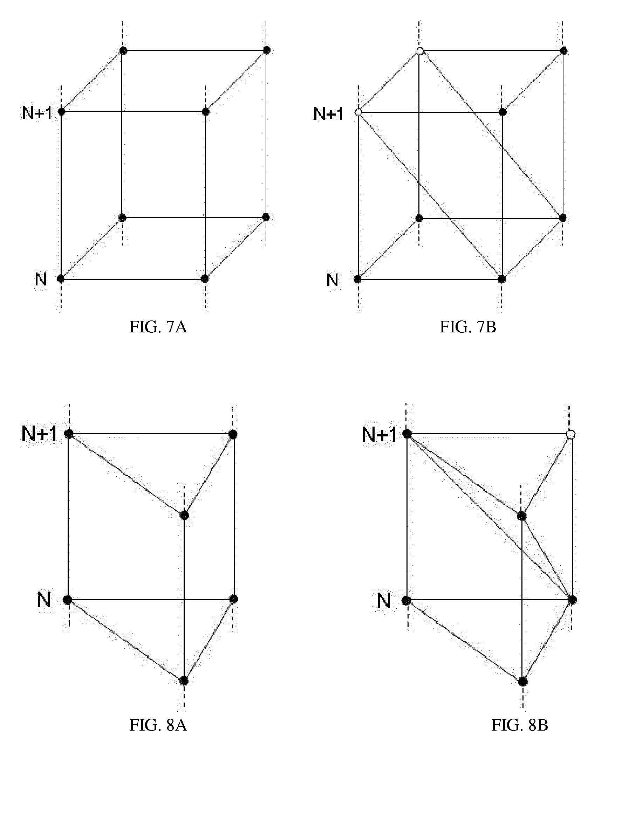

Selon un mode préféré de réalisation de la présente invention pour lequel le maillage surfacique est de type quad-dominant (voir le paragraphe "Construction d'un maillage surfacique sur une surface de référence"), deux types d'extrusion sont à considérer : l'extrusion d'un quadrilatère ou bien l'extrusion d'un triangle.
L'extrusion verticale d'un quadrilatère du maillage surfacique résulte en une série de quadrilatères consécutifs, ordonnés niveau par niveau selon l'axe vertical. La Figure 7A montre par exemple les quadrilatères formés pour les niveaux N et N+1. Les quadrilatères consécutifs sont connectés verticalement par les segments des lignes polygonales entre les niveaux N et N+1. Si deux quadrilatères consécutifs sont chacun formés de quatre noeuds appartenant à un même objet géologique, alors l'élément volumique obtenu est un hexaèdre (Figure 7A). Si un quadrilatère d'un niveau donné est formé de deux noeuds appartenant à un même objet géologique (par exemple les noeuds blancs du niveau N+1 dans la Figure 7B) et de deux autres noeuds appartenant à un autre objet géologique (par exemple les noeuds noirs du niveau N+1 de la Figure 7B), alors on forme des groupes de noeuds de même appartenance, et on trace deux diagonales entre les niveaux N et N+1 depuis l'un des deux groupes de noeuds (Figure 7B). On obtient alors deux prismes inversés (Figure 7B). On choisit un groupe de noeuds plutôt que l'autre à partir duquel sont tracées les diagonales en fonction de la qualité de la géométrie des éléments volumiques résultants.
Un contrôle qualité des éléments volumiques générés est ensuite réalisé. Trois conditions sont vérifiées pour un élément volumique donné :
- il doit correspondre à un hexaèdre ou à un prisme ;
- son barycentre doit être contenu dans son volume ;
- ses faces doivent être quasi planes.

Si une de ces conditions n'est pas remplie, alors le quadrilatère du maillage surfacique est subdivisé en deux triangles, selon une diagonale. Deux extrusions en triangles sont ensuite appliquées comme décrit ci-dessous.
L'extrusion d'un triangle résulte en une série de triangles consécutifs, ordonnés niveau par niveau selon l'axe vertical. La Figure 8A montre par exemple les triangles formés pour les niveaux N et N+1. Les triangles consécutifs sont connectés verticalement par les segments des lignes polygonales entre les niveaux N et N+1. Si deux triangles consécutifs sont chacun formés de trois noeuds appartenant à un même objet géologique, alors l'élément volumique obtenu est un prisme (Figure 8A). Si un triangle d'un niveau donné est formé de deux noeuds appartenant à un même objet géologique (par exemple les noeuds noirs du niveau N+1 dans la Figure 8B) et d'un autre noeud appartenant à un autre objet géologique (par exemple le noeud blanc du niveau N+1 de la Figure 8B), alors on forme des groupes de noeuds de même appartenance, et on trace deux diagonales entre les niveaux N et N+1 depuis le groupe de deux noeuds (Figure 8B). On obtient alors une pyramide et un tétraèdre (Figure 8B).
Un contrôle qualité des éléments volumiques générés est ensuite réalisé. Deux conditions sont vérifiées pour un élément volumique donné :
- il doit correspondre à un prisme, une pyramide ou à un tétraèdre ;
- son barycentre doit être contenu dans son volume.

Selon un mode de réalisation pour lequel une étape de "Mise en conformité des projections de limites de blocs sur une surface de référence" a été réalisée, les noeuds des éléments volumiques provenant d'éléments surfaciques ayant subi une mise en conformité sont remis à leur positon d'origine en 3D, en utilisant l'information conservée lors de cette étape de mise en conformité.

Par construction, les maillages volumiques générés par la présente invention dans l'espace paramétrique avant déformation et rupture respectent l'ensemble des contraintes géométriques initiales, c'est-à-dire la géométrie des objets géologiques (faille, horizon ou bord de domaine) et la géométrie des intersections des objets géologiques (intersection entre deux failles, entre une faille et un horizon, entre une faille et un bord de domaine, entre un horizon et un bord de domaine). De plus, grâce à l'extrusion le long des lignes polygonales verticales, les éléments du maillage volumique contiennent des arêtes qui sont orthogonales aux horizons (propriété importante pour la simulation de bassin et la simulation d'écoulement). Également par construction, les maillages obtenus par la présente invention sont valides dans l'espace paramétrique avant déformation et rupture.
Selon un mode de réalisation pour lequel le maillage surfacique réalisé lors de l'étape de "Construction d'un maillage surfacique sur la surface de référence" est quad-dominant, les maillages 3D résultants sont hexa-dominants après extrusion le long des lignes polygonales verticales.

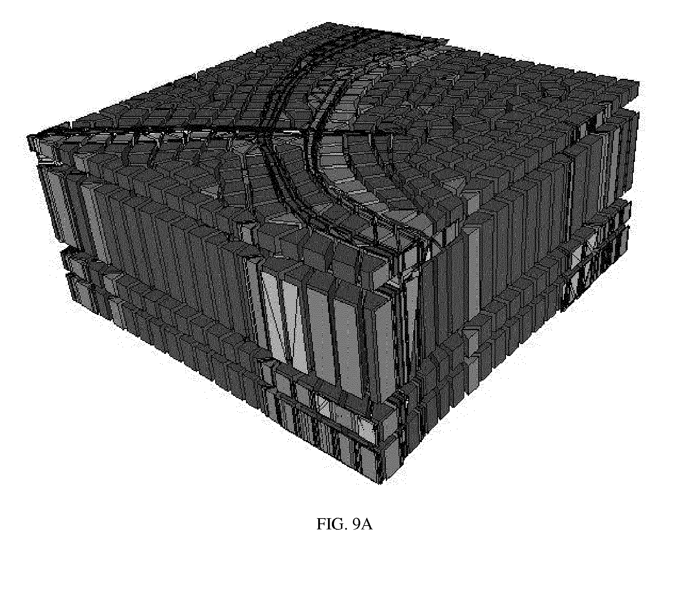

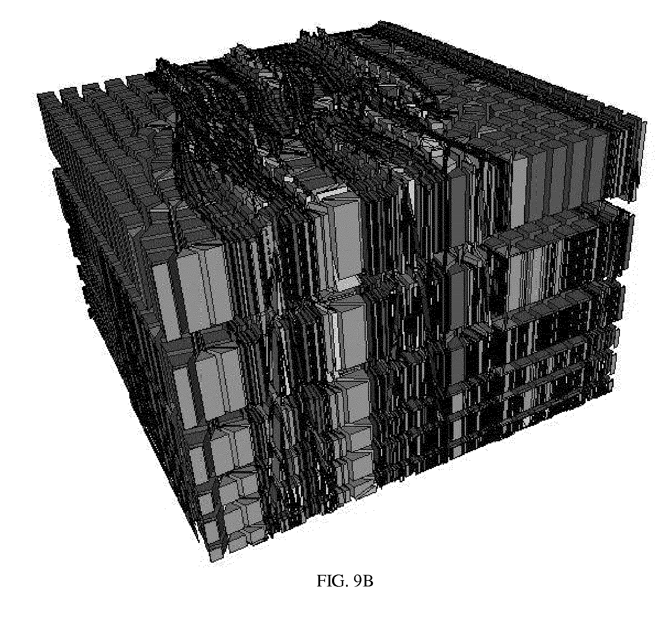

Ces avantages sont en particulier illustrés en Figures 9A et 9B, montrant les maillages volumiques obtenus par la présente invention respectivement pour les modèles Mod1 et Mod2. Les représentations mathématiques des horizons et des failles de ces modèles étant données en entrée de la présente invention dans l'espace paramétrique de Wheeler, ces modèles sont obtenus dans ce même espace. Dans ces figures, les mailles hexaédriques, en nombre distinctement dominant, sont présentées en gris foncé, les autres nuances de gris correspondant à des mailles de type prisme, tétraèdre ou encore pyramide. On peut également observer que les arêtes des éléments volumiques sont orientées perpendiculairement par rapport aux horizons. Le nombre et la géométrie des mailles au niveau des intersections horizon-faille, en particulier dans la Figure 9B, illustrent la capacité du procédé selon l'invention à représenter des zones particulièrement complexes.

### Passage du maillage volumique dans l'espace géologique

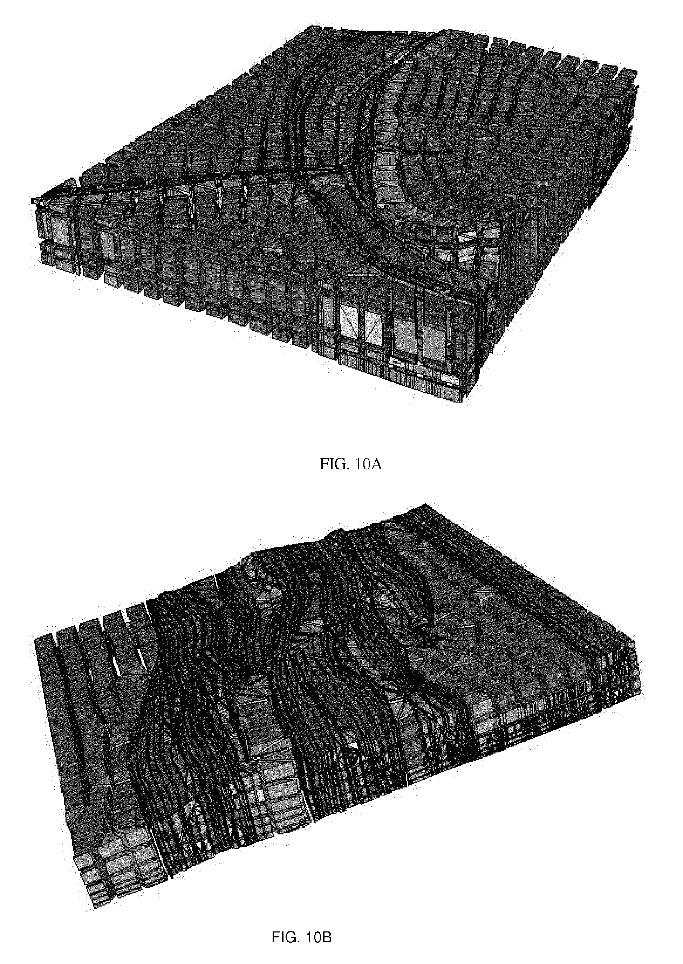

Selon un mode de réalisation de l'invention pour lequel le maillage volumique est construit dans l'espace paramétrique de Wheeler, on le transpose depuis l'espace paramétrique de Wheeler dans l'espace géologique grâce à une "transformation UVT⁻¹". Le spécialiste a parfaitement connaissance d'une telle technique.
Ce passage de l'espace paramétrique de Wheeler à l'espace géologique assure la conservation de la connectivité et de la topologie du maillage volumique. On retrouve ainsi les mêmes caractéristiques après passage dans l'espace géologique : on obtient des maillages volumiques hexa-dominants, respectant l'ensemble des contraintes géométriques, avec la même propriété d'orthogonalité des arêtes du maillage aux voisinages des horizons (propriété qui est conservée après la "transformation UVT⁻¹" grâce à la paramétrisation de l'espace paramétrique de Wheeler). Ces avantages sont illustrés en Figures 10A et 10B, montrant les maillages volumiques des modèles Mod1 et Mod2 transposés depuis l'espace paramétrique de Wheeler dans l'espace géologique. On peut en particulier constater que ces maillages contiennent toujours une majorité de mailles hexaédriques (mailles en gris foncé, les autres nuances de gris correspondant à des mailles de type prisme, tétraèdre ou encore pyramide), que l'orthogonalité entre mailles et horizons est toujours préservée, ainsi que le respect des contraintes géométriques.

### Optimisation du maillage volumique dans l'espace paramétrique de Wheeler

Selon un mode de réalisation de l'invention pour lequel le maillage volumique est construit dans l'espace paramétrique de Wheeler, on peut avoir recours à une étape facultative d'optimisation de ce maillage volumique, par une technique itérative de "bougé de noeuds" ("node relocation" en anglais), de sorte à assurer la validité du maillage volumique après passage dans l'espace géologique via une "transformation UVT⁻¹".
Pour réaliser cette optimisation, on suppose que, si chaque élément du maillage volumique dans l'espace paramétrique de Wheeler a un volume supérieur à un seuil prédéterminé, alors le maillage dans l'espace géologique, obtenu après "transformation UVT⁻¹", est valide.
Puis, on définit deux catégories portant sur les noeuds du maillage de l'espace paramétrique de Wheeler :
- noeud linéique : noeud appartenant à une courbe correspondant aux limites de blocs formés par les horizons, les failles et les bords du domaine fermé ;
- noeud surfacique : noeud non linéique appartenant à un objet géologique tel qu'un horizon ou une faille.
Pour un noeud surfacique appartenant à un horizon ou à une faille, on identifie les faces des éléments partageant le noeud et qui appartiennent au même objet géologique. On repositionne le noeud sur la représentation mathématique de cet objet géologique afin que les aires des faces correspondantes soient supérieures à un seuil prédéterminé, en lien avec le seuil volumique déjà spécifié ci-dessus
Cette même procédure est appliquée aux noeuds linéiques. Dans ce cas, le repositionnement se fait sur la courbe correspondante.
Cette procédure est appliquée de manière itérative à tous les éléments du maillage volumique dont le volume est plus petit que le seuil volumique spécifié.

### Exploitation du réservoir

En outre, l'invention concerne un procédé d'exploitation d'une formation souterraine, dans lequel on réalise les étapes suivantes :
- on construit un maillage volumique représentatif d'une formation étudiée au moyen du procédé tel que décrit précédemment ;
- on réalise une simulation de bassin et/ou une simulation de réservoir à partir dudit maillage volumique ;
- on détermine un schéma d'exploitation optimal du réservoir à partir desdits résultats de la simulation de bassin et/ou de la simulation de réservoir ;
- on exploite ledit réservoir en mettant en oeuvre ledit schéma d'exploitation optimal.

A partir d'une simulation de bassin et/ou une simulation de réservoir réalisées sur le maillage volumique obtenu lors des étapes précédentes, les spécialistes peuvent déterminer plusieurs schémas d'exploitation correspondant à différentes configurations possibles d'exploitation du réservoir souterrain : emplacement des puits producteurs et/ou injecteurs, valeurs cibles pour les débits par puits et/ou pour le réservoir, le type d'outils utilisés, les fluides utilisés, injectés et/ou récupérés, etc. Pour chacun de ces schémas, il convient de déterminer leurs prévisions de production. Ces prévisions de production probabilistes peuvent être obtenues au moyen d'un logiciel de simulation d'écoulement ainsi qu'au moyen du modèle numérique de réservoir calé. Une simulation de réservoir est une technique permettant de simuler les écoulements de fluides au sein d'un réservoir au moyen d'un logiciel appelé simulateur d'écoulement. Par exemple, le logiciel PumaFlow® (IFP Énergies nouvelles, France) est un simulateur d'écoulement.

On définit un ou plusieurs schémas d'exploitation possibles adaptés au modèle géologique étudié. Pour chacun de ces schémas, on détermine les réponses par simulation.

A partir des prévisions de productions probabilistes définies pour chaque schéma d'exploitation, les spécialistes peuvent par comparaison choisir le schéma d'exploitation qui leur semble le plus pertinent. Par exemple :
- en comparant le maximum du volume d'huile récupéré, on peut déterminer le schéma de production susceptible de fournir le maximum de récupération ou d'être le plus rentable ;
- en comparant l'écart type du volume d'huile récupéré, on peut déterminer le schéma de production le moins risqué.

On exploite alors le réservoir selon le schéma d'exploitation défini par exemple en forant de nouveaux puits (producteur ou injecteur), en modifiant les outils utilisés, en modifiant les débits et/ou la nature de fluides injectés, etc.

L'invention concerne, par ailleurs, un produit programme d'ordinateur téléchargeable depuis un réseau de communication et/ou enregistré sur un support lisible par ordinateur et/ou exécutable par un processeur. Ce programme comprend des instructions de code de programme pour la mise en oeuvre du procédé tel que décrit ci-dessus, lorsque le programme est exécuté sur un ordinateur.

## Revendications

1. Procédé de construction d'un maillage volumique d'une formation souterraine comprenant au moins une couche sédimentaire, délimitée verticalement par deux horizons géologiques et traversée par au moins une faille, à partir d'une représentation dans un domaine fermé de la géométrie desdits horizons et de ladite faille dans un espace paramétrique avant déformation et rupture, **caractérisé en ce que** :
a) on projette sur une surface de référence les limites d'au moins un bloc dans ledit domaine fermé, lesdits blocs étant délimités par ladite représentation desdites failles, desdits horizons et des bords dudit domaine fermé ;
b) on construit un maillage surfacique contraint par lesdites projections sur ladite surface de référence ;
c) à chaque noeud dudit maillage surfacique, on définit une ligne polygonale verticale ;
d) on construit un maillage volumique par extrusion verticale dudit maillage surfacique le long desdites lignes polygonales.

2. Procédé selon la revendication 1, dans lequel ladite surface de référence est un plan horizontal dans ledit espace paramétrique.

3. Procédé selon l'une des revendications précédentes, dans lequel ledit espace paramétrique est l'espace paramétrique de Wheeler.

4. Procédé selon la revendication 3, dans lequel ladite surface de référence est la surface située à la côte t=0 dans ledit espace paramétrique de Wheeler.

5. Procédé selon les revendications 3 et 4, dans lequel ledit maillage volumique est transposé dans l'espace géologique via une méthode de transformation liant ledit espace paramétrique de Wheeler et l'espace géologique.

6. Procédé selon l'une des revendications 3 à 5, dans lequel une technique de bougé de noeuds est appliquée audit maillage volumique.

7. Procédé selon l'une des revendications précédentes, dans lequel ledit maillage surfacique est de type quad-dominant.

8. Procédé selon la revendication 7, dans lequel ledit maillage surfacique est obtenu selon les étapes suivantes :
- on génère un maillage triangulaire contraint par lesdites projections sur ladite surface de référence ;
- on apparie des couples de triangles adjacents pour former des quadrilatères.

9. Procédé selon la revendication 8, dans lequel ledit maillage triangulaire est obtenu selon une méthode d'avancée de front.

10. Procédé selon l'une des revendications précédentes, dans lequel ladite ligne polygonale verticale d'un noeud du maillage surfacique est constituée d'au moins un segment vertical délimité par les intersections de la ligne verticale passant par ledit noeud avec lesdites représentations desdits horizons ou de ladite faille.

11. Procédé selon l'une des revendications précédentes, dans lequel ladite extrusion verticale d'un élément surfacique est réalisée de la façon suivante :
- on parcourt simultanément et segment après segment lesdites lignes polygonales associées audit élément surfacique ;
- on relie latéralement les extrémités desdites lignes polygonales d'un même niveau et verticalement les extrémités desdites lignes polygonales de niveaux consécutifs ;
- pour chaque élément volumique ainsi formé, si des noeuds d'un même niveau n'appartiennent pas à une même faille ou à un même horizon, on découpe ledit élément volumique selon au moins un plan transversal passant par les deux niveaux consécutifs.

12. Procédé selon la revendication 1, dans lequel une étape de mise en conformité des courbes et points résultant de ladite projection desdites limites de blocs est réalisée entre les étapes a) et b), consistant en une fusion desdites courbes et/ou desdits points dont l'inter-distance est inférieure à un seuil prédéterminé, et/ou en l'ajout de points au niveau des intersections entre plusieurs desdites courbes.

13. Produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé selon l'une des revendications précédentes, lorsque ledit programme est exécuté sur un ordinateur.

14. Procédé d'exploitation d'une formation souterraine, **caractérisé en ce qu'**on réalise les étapes suivantes :
- on construit un maillage volumique représentatif de ladite formation au moyen du procédé décrit selon l'une des revendications 1 à 12;
- on réalise une simulation de bassin et/ou une simulation de réservoir à partir dudit maillage volumique ;
- on détermine un schéma d'exploitation optimal du réservoir à partir desdits résultats de la simulation de bassin et/ou de la simulation de réservoir ;
- on exploite ledit réservoir en mettant en oeuvre ledit schéma d'exploitation optimal.
